# EUROPÄISCHE PATENTANMELDUNG

(11) **EP 2 679 324 A2**
(43) Veröffentlichungstag der Anmeldung: **01.01.2014**
(21) Anmeldenummer: 13173765.2
(22) Anmeldetag: 26.06.2013
(51) Int. Cl.: B23B 41/12, B23P 9/02, B23P 23/04, C23C 4/02

(54) **Werkzeuge und Verfahren zum mechanischen Aufrauen**

(30) Priorität: 27.06.2012 DE 102012211074
(71) Anmelder: Gehring Technologies GmbH, 73760 Ostfildern (DE)
(72) Erfinder: Flores, Gerhard, 73760 Ostfildern (DE); Dipl.-Ing. Baumgartner, Erwin, 73760 Ostfildern (DE); Rach, Michael, 73776 Altbach (DE)
(74) Vertreter: Dreiss

(57) **Zusammenfassung**

Es werden ein Verfahren und Vorrichtungen (5a, 5b, 5c)vorgeschlagen, die eine Zylinderbohrung einer Brennkraftmaschine so vorbereitet, dass die Zylinderbohrung anschließend thermisch beschichtet werden kann.

## Beschreibung

### Stand der Technik

Zur Herstellung von tribologisch geeigneten Oberflächen in Zylinderbohrungen von Verbrennungsmotoren dient die Prozesskette Aufrauen, thermisches Beschichten und Honen. Das Aufrauen dient dazu, auf der Substratoberfläche eine geeignete Topografie herzustellen, die eine feste Verbindung zwischen der thermischen Spritzschicht und dem Substrat ermöglicht. Die Ausbildung der Profilform und der Profiltiefe hat einen wesentlichen Einfluss auf die Haftzugfestigkeit der Schicht. Die Schichthaftung selber ist bestimmt durch die Adhäsion der beiden Werkstoffe zueinander, den lateralen Schrumpfspannungen, die sich zwischen den Formelementen des Aufrauprofils und der eingelagerten Schicht ergeben und dem radialen Formschluss, welcher aufgrund von Hinterschnitten der erhabenen Aufrauprofilelemente entsteht.

Die Erfindung betrifft ein Werkzeug und ein Verfahren zum mechanischen Aufrauen einer Substrat-Oberfläche, so dass auf der erfindungsgemäß vorbereiteten Substrat-Oberfläche eine sehr gut haftende Beschichtung aufgebracht werden kann. Neben anderen Verfahren, wie Sandstrahlen, Laserstrahlen oder Hochdruckwasserstrahlen, sind Verfahren der mechanischen Bearbeitung bekannt, bei denen Spanen und Umformen miteinander prozesstechnisch verbunden werden. Diese letztere Gruppe wiederum kennt Prozesse, bei denen Spanen und Drücken angewendet werden. Dabei besteht zwischen dem Drückwerkzeug und dem Material ein Gleitvorgang. Eine weitere Kombination aus Spanen und Umformen besteht im Spanen mit nachfolgendem Walzen. Hierbei wird das zunächst durch Feinbohren, Drehen oder Fräsen hergestellte Oberflächenprofil durch Walzen umgeformt. Dabei rollt eine Walze über die Substrat-Oberfläche und bewirkt durch deren Umformung eine Verbesserung der Hafteigenschaften.

Da sich die Erfindung mit der zuletzt genannten Kombination von Spanen und Walzen (oder Rollieren) beschäftigt, wird nachfolgend folgender Stand der Technik gewürdigt.

Aus der US 7,220,458 B2 ist ein Verfahren zum thermischen Beschichten bekannt bei dem die zu beschichtende Bohrungsoberfläche durch eine Profilierung mit Hinterschnitt vorbereitet wird.

Die EP 2 267 178 A2 beschreibt ein Aufrauverfahren in der Kombination von Spanen und Walzen. Die Walzoperation ist so ausgelegt, dass bei dem Kombinationswerkzeug der Abstand der Walze zur Formschneide abhängig ist von der Periodizität des im ersten Verfahrensschritt eingeschnittenen Formprofils (Steg, Breite und Vorschub). Die Walze überdeckt jeweils einen Profilsteg.

Die axiale Anordnung von Zerspanwerkzeug und Walze ist abhängig von der Formschneide und deren kinematischen Bedingungen wie Vorschub, Stegbreite, Profiltiefe. Dies erfordert eine genaue Justierung der Arbeitsflächen der Schneide und der Walze zueinander. Da die Walze immer nur eine Stegbreite bearbeitet, ist hier mit einer geringen Standmenge der Walze zu rechnen. Außerdem ist die Walze in radialer Richtung nicht relativ zur Schneide nachstellbar, so dass bei unterschiedlichen Verschleißraten keine neue Justierung mehr möglich ist und somit der Grad der Umformung reduziert wird und geringere Hinterschnitte entstehen.

Die DE 10 2006 004 769 A1 geht von einem Aufrauverfahren aus, bei welchem die Substrat-Oberfläche in einem ersten Verfahrensschritt spanend bearbeitet und in einem nachfolgenden Schritt die zuvor spanend hergestellten Profilspitzen "umgebogen" werden. Dies kann durch Walzen, Pressen oder Bestrahlen erfolgen. Die Substrat-Oberfläche, das heißt die spätere Kontaktfläche zur Beschichtung, besteht also in einer Profilform mit Hinterschnitten. Die Walze ist nicht orthogonal zum gespanten Profil geneigt, so dass Schlupf zwischen Walze und gespantem Profil entsteht.

Die Offenlegung DE 10 2008 024 313 A1 kennt ebenfalls eine Walzbearbeitung nach dem Schneiden. Die Walze ist jedoch ausgebildet mit zahlreichen Messerscheiben, deren Schneidkanten im Abstand der Profilstege angeordnet sind. Diese Auslegung hat den großen Nachteil, dass zunächst das Werkzeug genau auf die Profilspitzenposition der vorgearbeiteten Profilform in der Axialposition ausgerichtet werden muss, um dann durch radiales Zustellen an diesen erhabenen Profilstegen das Profil zu spalten. Darüber hinaus ist es notwendig, den Abstand der Messerscheiben genau auf den Vorschub bzw. auf den Abstand der erhabenen Stege einzurichten. Auch hier ist das Walzwerkzeug profilorientiert in der axialen Lage und in der Auslegung bestimmt, was eine schwierige Handhabung beim Einrichten des Prozesses und auch eine aufwändige Herstellung bei der Beabstandung der Messerscheiben beinhaltet.

Aus der DE 10 2009 028 040 A1 ist ein Kombinationswerkzeug zur Strukturierung von Oberflächen bekannt, das über die umzuformende Oberfläche gleitet.

Aus der DE 20 2009 014 180 U1 ist ein Kombinationswerkzeug zur Strukturierung von Oberflächen mit einer Walze zum Umformen einer vorgeformten Oberfläche bekannt. Bei diesem Werkzeug findet ebenfalls ein Gleiten des Umformwerkzeugs über die umzuformende Oberfläche statt.

In der DE 20 2009 014 180 U1 wird ebenfalls ein Zerspanungsprozess mit einem Walzprozess zur Umformung der Profilstege kombiniert. Bei diesem Verfahren muss die Walze mit einer Profilierung versehen werden, welche sich am Vorschub bzw. dem Abstand der Profilstege orientiert. Diese Werkzeuge haben einen großen Verschleiß auf der Walzenseite, sodass ein wirtschaftlicher Betrieb nicht möglich ist. Auch die axiale Beabstandung von den Konturen der Walze zur Formschneide erfordert einen hohen Aufwand beim Einrichten des Werkzeuges.

Bei allen in den oben genannten Verfahren werden aufwändig herzustellende und einzustellende Werkzeuge benötigt, die verhältnismäßig rasch verschleißen und teilweise nicht nachstellbar sind und daher eine wirtschaftliche und prozesssichere Großserien-Fertigung erschweren oder nicht zulassen.

### Aufgabe der Erfindung

Aufgabe der Erfindung ist es, eine Vorrichtung und ein Verfahren zum mechanisches Aufrauen bereitzustellen, welche unabhängig vom anschließenden Beschichtungsverfahren einsetzbar ist. Dabei soll die erfindungsgemäße Vorrichtung sowohl auf einer Honmaschine als auch auf einem Bearbeitungszentrum einsetzbar sein. Je nach Werkstoff und Profilgeometrien sollen eine Minimalmengenschmierung oder eine Vollschmierung möglich sein.

Entsprechend der Aufgabenstellung sieht die Erfindung mindestens zwei Werkzeuge vor, welche die Bearbeitungsschritte
- Feinbohren (erstes Werkzeug),
- Profilieren (zweites Werkzeug), das heißt das Herstellen einer profilierten Oberfläche, und
- Walzen (drittes Werkzeug)
nacheinander in mehreren Arbeitshüben auf mindestens zwei Spindeln ausführen.

Dabei kann jedes Werkzeug als separates Werkzeug ausgeführt sein. Alternativ können auch jeweils zwei Werkzeuge zu einer Kombinations-Vorrichtung zusammengefasst werden. So können das erste Werkzeug und das zweite Werkzeug in einer Vorrichtung realisiert werden. Es ist auch möglich, das zweite Werkzeug und das dritte Werkzeug in einer Vorrichtung zu realisieren.

Dabei ist es möglich, das Werkstück in einer Aufspannung zu belassen, so dass die Werkzeuge nacheinander in die zu bearbeitende Bohrung des Werkstücks einfahren. Alternativ dazu kann das Werkstück auch nacheinander zu den verschiedenen Bearbeitungsstationen transportiert und dort bearbeitet werden. Somit bieten die erfindungsgemäßen Vorrichtungen und die erfindungsgemäßen Verfahren viele Freiheitsgrade bei der Produktion, so dass immer eine den Randbedingungen des Einzelfalls entsprechende optimale Lösung gefunden werden. Randbedingungen sind dabei unter anderem der zur Verfügung stehende Maschinenpark, die geforderte Stückzahl und natürlich das zu bearbeitende Werkstück (Abmessungen, Werkstoff).

Mit den heute zur Verfügung stehenden Honmaschinen und Bearbeitungszentren kann sichergestellt werden, dass alle Prozesse die gleiche Kinematik und Achslage aufweisen und daher umlaufend am Umfang eine konstante Profiltiefe beim Profilschneiden erreicht wird. Wenn die Positioniergenauigkeit eines Bearbeitungszentrums nicht ausreichend sein sollte, kann dies zum Beispiel durch den Einsatz einer Kombinationsvorrichtung in die zwei Werkzeuge integriert sind ausgeglichen werden, da sich Feinbohrschneiden und Profilschneiden oder Profilschneiden und Umformwalzen der gleichen Rotationsachse in einer gemeinsamen Vorrichtung befinden. Ebenso besteht die Möglichkeit, die Bohrung des Werkstücks in ihrer Position zu belassen und die einzelnen Werkzeuge nacheinander einzuwechseln. Die erfindungsgemäße Vorrichtung ist einsetzbar auf einer Honmaschine oder auf einem Bearbeitungszentrum. Dabei wird für die Bearbeitungsschritte 2 und 3 jeweils eine Zustelleinrichtung benötigt.

Die erfindungsgemäße Kombinations-Vorrichtung ist mit der Maschinenspindel starr verbunden und beginnt die Bearbeitung vom oberen Bohrungsrand mit den vorauslaufenden Feinbohrschneiden des ersten Werkzeugs. Auch kann die Bearbeitung von unten beginnen, was eine entsprechende Anordnung von Feinbohrschneide und Profilschneide erfordert.

Die mindestens eine Feinbohrschneide gibt der Bohrung die Lagegenauigkeit hinsichtlich Rechtwinkligkeit und Position. Die Feinbohrschneiden sind fest im Werkzeug eingebaut, eingelötet oder eingeklebt und auf den Bearbeitungsdurchmesser geschliffen oder sie befinden sich angeschraubt oder eingeklemmt auf einem Biegehalter oder auf einem festen Einbauhalter und können durch Justierschrauben in die erforderliche Axialposition und auf den gewünschten Arbeitsdurchmesser eingestellt werden.

Die in Vorschubrichtung dahinter angeordnete Schneidplatte (Formschneide) des zweiten Werkzeugs vergrößert den Durchmesser der Bohrung, so dass die vom ersten Werkzeug geschaffene Oberfläche vollständig koaxial abgetragen wird.

Die Schneidplatte des zweiten Werkzeugs besteht bevorzugt aus mehreren Partialschneiden, die hinsichtlich der Querschnittsfläche und damit der wirksamen Spanungsquerschnitt sukzessiv zunehmen. Damit wird das Zerspanvolumen des zweiten Werkzeugs auf mehrere Partialschneiden aufgeteilt, was zu einer Erhöhung der Standmenge führt.

Die Änderung des Zerspanungsquerschnitts der Partialschneiden kann sowohl mit zunehmender Tiefe (d. h. in radialer Richtung) als auch mit zunehmender Breite (d. h. in axialer Richtung oder Vorschubrichtung) erfolgen. Neben den Partialschneiden können auch Konturen zum Entfernen von Spänen (vor allem aus den Nuten) in die Schneidplatte integriert sein.

Mit Hilfe der Formschneide des zweiten Werkzeugs können vorteilhafter Weise rechteckförmige Nuten/Profile hergestellt werden. Es können jedoch auch Spitz-, Rund-, Rauten- oder Trapezprofile mit der Formschneide hergestellt werden. Die Formschneide ist eine einteilige Schneidplatte, die entsprechend der jeweiligen Profilform gesintert und/oder geschliffen oder erodiert wird.

Durch die im dritten Bearbeitungsschritt erfolgende Umformung der zuvor geschaffenen formgeschnittenen Mikrostrukturen (wie Rechteck-, Trapez- oder Dreiecksprofile) entstehen an deren Flanken durch Umformung der Profilstege zusätzlich Sub-Mikroprofile, wie seitliche hinterschnittartige Materialüberhänge mit kleinsten Rissen und Verschuppungen, die zu einer Erhöhung der Haftfestigkeit beitragen. Der Umformvorgang ist schlupffrei auszulegen, so dass keine Zerspanung, sondern nur ein Abdruck des Walzenprofils den Stofffluss im Umformschritt bewirkt. Die Vorrichtung, welche den dritten Bearbeitungsschritt ausführt, ändert weder die Lage noch die Winkligkeit der Bohrung und kann daher selbstzentrierend sein. Beispielweise kann dies dadurch erreicht werden, dass drei Walzen über den Umfang verteilt angeordnet sind.

Mit wirtschaftlichen Standmengen soll das Verfahren in der Serienfertigung bei der Herstellung von thermisch beschichteten Zylinderbohrungen einsetzbar sein.

Die Formschneide des zweiten Werkzeugs ist auf einem Biegehalter gelagert und wird über ein erstes Zustellsystem der erfindungsgemäßen Vorrichtung zum Beispiel elektro-mechanisch auf Maß eingestellt. Dadurch ist eine Nachstellung vor, während oder nach der Bearbeitung möglich, um den Verschleiß der Schneidplatte zu kompensieren, maßhaltig zu arbeiten und die Standmenge zu erhöhen.

Bei der erfindungsgemäßen Vorrichtung nach dem unabhängigen Anspruch 1, werden die beiden spanabhebenden
Bearbeitungsschritte, nämlich das Feinbohren und das Profilieren der zu beschichtenden Oberfläche, mit einer
Kombinationsvorrichtung hergestellt und damit in einem Arbeitsgang hergestellt. Dies bedeutet, dass beim anschließenden Umformen keine Späne mehr auftreten. Wegen dieser Trennung zwischen spanabhebenden Bearbeitungsschritten und dem spanlosen Umformprozess, ist jeder der Bearbeitungsschritte mit optimalen Prozessparametern und/oder zeitlich von den anderen Prozessen getrennt durchführbar. Dadurch ergeben sich sehr hohe Standzeiten und eine optimale Bearbeitungsqualität.

Wenn, wie mit der Vorrichtung nach dem nebengeordneten Anspruch 2 beansprucht, die zur Durchführung der Bearbeitungsschritte Profilieren und Umformen benötigten Werkzeuge in einer Vorrichtung zusammengefasst werden dann ist die Koaxialität der profilierten Bohrungsoberfläche und des Formwerkzeugs sehr gut. Dadurch ergibt sich eine sehr gute und gleichmäßige Umformung der gesamten Bohrungsoberfläche. Weil beim Profilieren das Spanvolumen relativ gering ist und wegen der schmalen Nuten nur sehr kleine und feine Späne entstehen, ist auch die Problematik von verklemmenden Spänen zwischen Bohrungsoberfläche und den Walzen des Umformwerkzeugs, in der Praxis nicht vorhanden.

Entgegen der Vorschubrichtung ist axial im geringst möglichen Abstand zu dem zweiten Werkzeug das dritte Werkzeug mit einer drehbar gelagerten (Umform-)Walze angeordnet. Die Walze ist axial und radial gelagert, sodass die Walze ausschließlich durch Rollreibung beaufschlagt wird. Die axiale Lagerung ist für die Hubrichtung in Bearbeitungsfunktion ausgelegt.

Daher hat auch diese Vorrichtung in vielen Anwendungsfällen spezifische Vorteile.

Der erfindungsgemäße Umformprozess lässt sich auch mit einer Vorrichtung zur Erzeugung eines Aufrauprofils gemäß dem nebengeordneten Anspruch 3 durchführen. Dies bedeutet, dass eine bereits vorbereitete Bohrung in erfindungsgemäßer Weise umgeformt werden kann, sodass sich die gewünschten verbesserten Hafteigenschaften einstellen.

Die genannten Vorteile lassen sich auch durch die Verfahren gemäß der Ansprüche 33 ff. erzielen.

Auch hier hat die Praxis gezeigt, dass in vielen Fällen ein Aufteilen der drei Bearbeitungsschritte auf zwei oder sogar drei Vorrichtungen, vorteilhaft sein kann.
Bevorzugt ist die Walze beziehungsweise das dritte Werkzeug in radialer Richtung zustellbar. Diese Zustellung kann positions- und/oder kraftgesteuert sein. Bei einer kraftgesteuerten Zustellung legt sich die Walze an das zuvor von dem ersten Werkzeug geschnittenen Formprofil an und formt diese bevorzugt so um, dass sich Hinterschnitte ergeben. Aufgrund der definierten Zustellkraft lässt sich die gewünschte Umformung zuverlässig und prozesssicher erreichen.

Neben einer aktiv gesteuerten Zustellkraft, die durch eine Zustelleinrichtung der Maschine erzeugt wird, kann auch eine passive Zustellkraft in Form der Zentrifugalkraft wirken. Die Zustellung sollte bevorzugt formschlüssig erfolgen, so dass gesteuerte und reproduzierbare Zustellbewegungen in beide Richtungen (Durchmesservergrößerung und Durchmesserverkleinerung) möglich sind.

Diese Zustellung erfolgt durch eine zweite Zustellstange der erfindungsgemäßen Vorrichtung, die wiederum von einem zweiten Zustellsystem der Honmaschine oder des Bearbeitungszentrums betätigt wird.

Um ein reines Abrollen der Funktion der Walze, ohne Schlupf oder Gleiten zwischen Werkstück und Walze, zu gewährleisten, ist die Walze entsprechend der sich aus dem Vorschub der Vorrichtung bei der Bearbeitung einer Bohrung ergebenden Steigung geneigt. Dadurch wird die Standmenge der Walze deutlich erhöht und die Prozesssicherheit der Oberflächenstrukturierung verbessert.

Die Mantelfläche der Walze ist bestückt mit einer gebundenen Hartstoffkörnung, wie zum Beispiel einer Diamantkörnung, welche hinsichtlich der Kornstruktur so ausgelegt ist, dass die Kornspitzen in die vom ersten Werkzeug geschaffenen erhabenen Profilstege Vertiefungen eingedrückt werden, welche eine seitliche Verdrängung des Materials bewirken und damit aufgrund des Materialüberhanges hinterschnittartige Profile bilden.

Die Körnung ist in Abhängigkeit der Stegbreite auszulegen. Sie sollte z. B. ein Drittel (1/3) der Breite der erhabenen Profilstege betragen. Auch andere Walzenbestückungen mit erhabenen Topographien, wie zum Beispiel ein Rändel- oder Warzenprofil, können zur Verformung der Profilstege verwendet werden.

Die Walze ist so lang, dass sie immer mehrere Profilstege bestimmter Stegbreiten überdeckt und welche somit gleichzeitig umgeformt werden.

Eine genaue Positionierung der Walze in axialer Richtung relativ zu dem zweiten Werkzeug ist somit nicht notwendig.

Die diamantierte Länge der Umformwalze ist möglichst groß auszulegen, um lokal beim axialen Überfahren eine möglichst große Kontaktzeit zu erreichen.

Weil die erfindungsgemäße Vorrichtung drei Werkzeuge (Feinbohrschneide, Formschneide und Walze) umfasst, arbeiten diese Werkzeuge mit dem gleichen Vorschub.

Deshalb und weil bevorzugt die Drehachse der Walze entsprechend dem Vorschub der Vorrichtung geneigt ist, steht die Drehachse der Walze orthogonal der Längsrichtung des von dem ersten Werkzeug geschaffenen Profilstegs.

Damit wird ein dem Abrollen der Walze auf dem Profilsteg überlagertes Gleiten vermieden; es entstehen ausschließlich Abdrücke der Diamantkornspitzen in den erhabenen Profilstegen und keine Riefen. Ist neben den Eindrücken der Diamantkristalle (Umformen) eine spanende Wirkung erwünscht, so kann dies durch eine gezielt nicht orthogonale Achslage der Walze bezogen auf die Längsachse der umzuformenden Stege erreicht werden.

Aufgrund dieser Korneindrücke erfolgt ein Materialfluss, sodass die erhabenen Profilstege umgeformt werden und sich seitlich Grate und Materialüberhänge ausbilden. Die Walze kann durch das Zustellsystem mit einer vorgegebenen Anpresskraft radial gegen die Bohrungswand zur Umformung der Profilstege zugestellt werden.

Eine andere Variante besteht in der konischen Ausbildung von Walzen, die mit zunehmender axialer Überfahrung der Bearbeitungsstelle einen zunehmenden Druck aufbauen und damit eine zunehmende Verformung der Stege bewirken.

Dabei kann bei beiden Alternativen der zuvor geschnittene Profilsteg in seiner Höhe um 10% bis 50% reduziert werden. Die nach dem Umformen verbleibende Profiltiefe beträgt ca. 100 µm.

Es ist zu erwähnen, dass die Diamantkristalle in einer galvanisch aufgetragenen Nickelmatrix oder in einer gesinterten Bindefase gehalten werden. Die einzelnen Diamantkristalle sind monokristalline Kristalle in bestimmter variierbarer Anordnungsdichte, welche in bestimmter Konzentration an der Oberfläche der Walze angeordnet sind. Die Kristalle sollen vorzugsweise nicht splitterfreudig, sondern solide und blockig, jedoch mit geringen Keilwinkeln beschaffen sein.

Es bleibt zu erwähnen, dass die Feinbohrschneiden, Formschneide und die Walze nach dem Durchfahren der gesamten Bohrungslänge im Abwärtshub vollständig über die untere Bohrungskante hinausfahren. Da sich dort in geringen Abständen Störkanten der Lagerstühle für die Kurbelwellenlagerung befinden, sind Feinbohrschneiden, Formschneide und Walze mit dem geometrisch minimalem Abstand in Längsrichtung konstruktiv angeordnet.

Beim Ausfahren vom unteren Umkehrpunkt in die obere Endlage des Werkzeuges oberhalb der Bohrung werden Formschneide und Walze radial zurückgestellt, so dass ein kollisionsfreies Durchfahren der fertig aufgerauten Bohrungsfläche erfolgt.

Weil das zweite Werkzeug den Durchmesser der bearbeiteten Bohrung gegenüber dem von dem ersten Werkzeug erreichten Bohrungsdurchmesser etwas vergrößert, muss das erste Werkzeug beim Ausfahren der Vorrichtung aus der Bohrung nicht radial zurückgestellt werden.

Die Austrittsöffnungen für Kühlschmierstoff sind beim Feinbohren, Profilieren und Walzen jeweils auf den Ort der Bearbeitung gerichtet, z. B. auf die Schneidenspitzen. Die erfindungsgemäße Vorrichtung auch bei der
Trockenbearbeitung, ggf. mit Kaltluft- oder
Trockeneisspülung oder anderen kryogenen Medien, als Bearbeitung mit Minimalmengen- oder Vollschmierung betrieben werden. Dabei soll das Kurbelgehäuse einer Brennkraftmaschine weitgehend ohne Waschen und Trocknen der thermischen Beschichtung zugeführt werden können.

Eine weitere Variante einer erfindungsgemäßen Vorrichtung besteht darin, dass zum oberen Einspannende das Werkzeuges hin noch eine Anfasschneide eingebracht ist, die mit Erreichen des unteren Umkehrpunktes nur eine Rotation zur Bearbeitung der oberen Bohrungskante zum Anarbeiteten einer definierten Kolbenfügefase ausführt.

Mit der erfindungsgemäßen Vorrichtung lassen sich leistungsfähige Aufrauprofile für hohe Haftzugfestigkeiten unabhängig vom anschließenden Beschichtungsverfahren herstellen. Da sowohl Aufbohren, Profilieren und Walzen in einem Abwärtshub des Werkzeuges örtlich nacheinander durchgeführt werden, lassen sich minimale Bearbeitungszeiten von unter 30 s bei Bohrungen von PKW-Kurbelgehäusen erreichen. Die axiale Anordnung von Feinbohrschneide, Formschneide und Walze ist mit minimalen Abständen ausgeführt, sodass auch geringen Überläufen, Zylinderbohrungen in Kurbelgehäusen bearbeitbar sind.

Durch die Diamantierung der Walze entfällt ein exaktes Justieren in axialer Richtung des Umformwerkzeuges in Abhängigkeit vom zuvor geschnittenen Formprofil. Damit wird der Prozess robust und leicht zu handhaben.

Weitere Vorteile und vorteilhafte Ausgestaltungen der Erfindung sind in der nachfolgenden Zeichnung und deren Beschreibung entnehmbar.

Es zeigen:
- Figur 1:: ein Profilsteg vor und nach der Umformung durch eine Walze
- Figur 1.1:: ein bemaßter beispielhafter Querschnitt einer mit der erfindungsgemäßen Vorrichtung aufgerauten Oberfläche,
- Figur 1.2:: ein weiterer bemaßter beispielhafter Querschnitt einer mit der erfindungsgemäßen Vorrichtung aufgerauten Oberfläche,
- Figur 2:: ein Längsschnitt durch eine erfindungsgemäße Vorrichtung mit Feinbohrschneide und Formschneide,
- Figur 3a:: ein Ausführungsbeispiel einer erfindungsgemäßen Vorrichtung mit Formschneide und Walze,
- Figur 3b:: ein Längsschnitt durch eine erfindungsgemäße Vorrichtung, die nur ein drittes Werkzeug (Walze) aufweist,

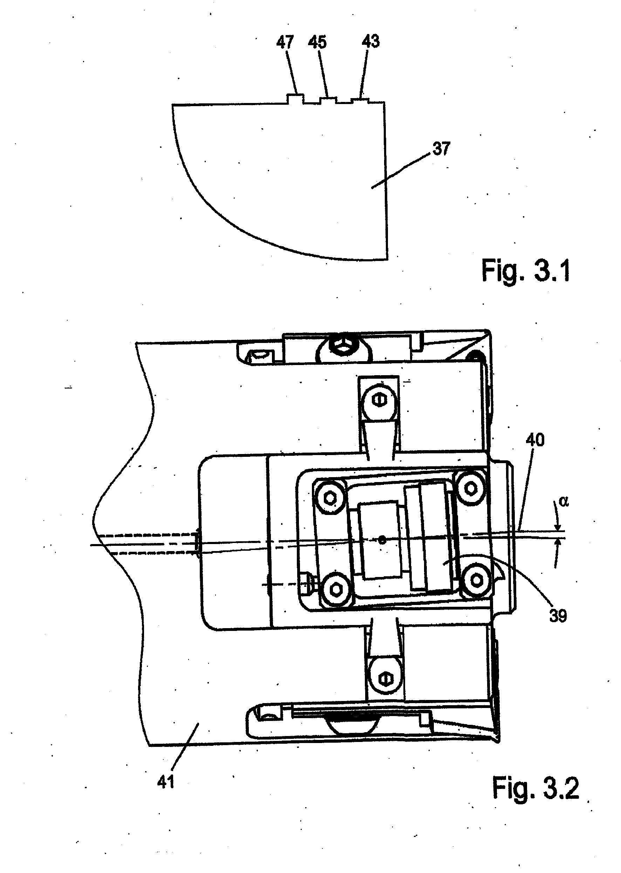

- Figur 3.1:: die Formschneide im Detail,
- Figur 3.2:: die Anordnung der Walze im Grundkörper der Vorrichtung.

Beschreibung der Ausführungsbeispiele

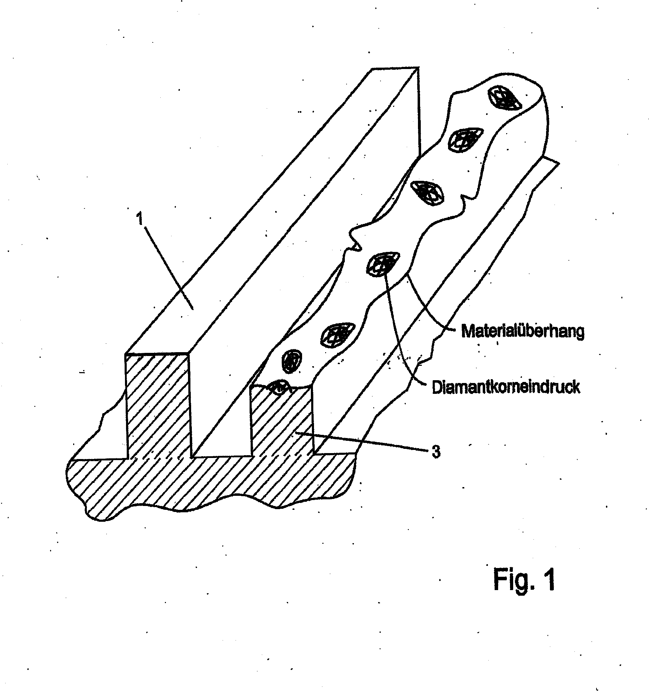

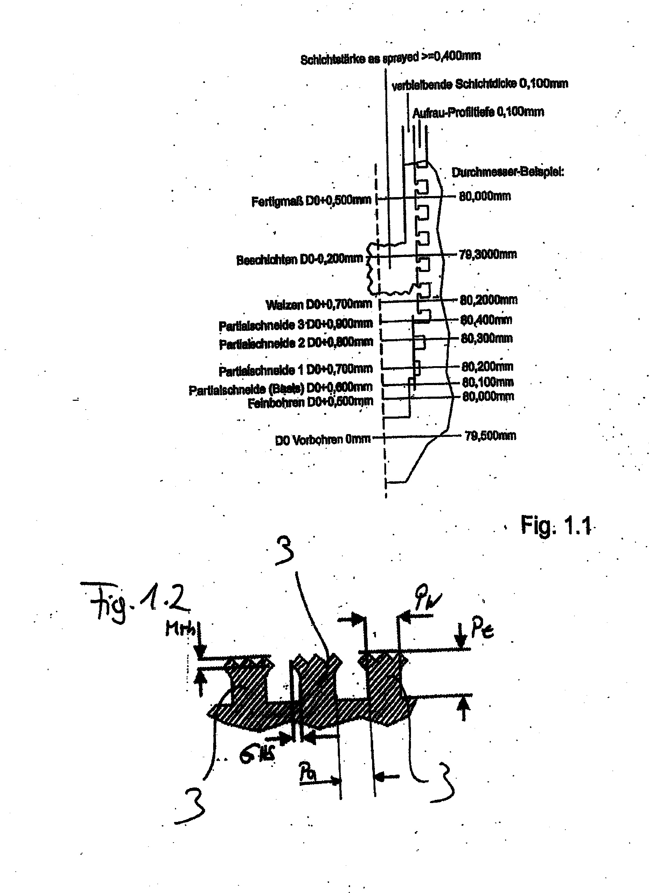

Figur 1 zeigt zunächst beispielhaft einen Profilsteg 1 vor dem Umformen und einen Profilsteg 3 nach dem Umformen durch die erfindungsgemäße Walze. (nicht dargestellt). Der Profilsteg 1 wird durch eine entsprechend profilierte Schneidplatte des ersten Werkzeugs hergestellt.

In diesem Beispiel haben die Profilstege einen rechteckigen oder quadratischen Querschnitt.

Der Profilsteg 3 entsteht aus dem Profilsteg 1 durch Walzen mit dem zweiten Werkzeug. Die erhabene Fläche des Profilstegs 3 wurde durch den Umformprozess gegenüber der ursprünglichen Profiltiefe deutlich zurückgesetzt. In der Praxis hat sich ein Zurücksetzen von bis zu 50 % von der Höhe des Profilstegs 1 bewährt.

Weil die Walze des zweiten Werkzeugs bevorzugt mit Diamantkörnern versehen ist, weist die erhabene Fläche des Profilstegs 3 kraterförmige Vertiefungen/Eindrücke auf, die beim Abrollen der Walze von den Diamantkornspitzen geformt wurden.

Durch das erwähnte Zurücksetzen des Profilstegs und die Diamantkornspitzen, werden die Kanten des Profilstegs 3 stark verformt, sodass Materialüberhänge und Mikrorisse und somit hinterschnittartige formschlussfähige Konturen entstehen.

Figur 1.1 zeigt die Durchmesserrelationen ausgehend vom Vorbohren für alle Prozessschritte. Ebenso ist ein Ausführungsbeispiel angefügt.

Aus der Figur 1 wird deutlich, dass die feststehende Schneide des ersten Werkzeugs, das für das Vorbohren auf den Durchmesser D0 eingestellt ist, beim Ausfahren aus der Bohrung keinen Schaden nimmt, weil der Bohrungsdurchmesser im gezeigten Beispiel nach dem Walzen um 0,2 mm größer ist als der Durchmesser D0.

Auch die Aufteilung des zur Herstellung der Profilstege 1 erforderlichen Zerspanvolumens auf insgesamt drei Partialschneiden der Schneidplatte des ersten Werkzeugs ist gut zu erkennen.

In der Figur 1.2 ist ein Querschnitt durch ein mit dem erfindungsgemäßen Werkzeug hergestelltes Rauheitsprofil dargestellt.

Die Geometrie des Rauheitsprofils ist durch folgende Größen charakterisiert:

| | |
|---|---|
| Profiltiefe Pt: | 50 - 200 µm |
| Profilweite Pw: | 50 - 400 µm |
| Größe der Hinterschnitte GHs: | ≤ 0,5 • Pw (25 - 200 µm) |
| Mikrorauheit Mrh: | ≤ 0,5 • Pt (25 - 100 µm) |
| Profilabstand Pa: | ≥ 2 • GHs |

Aus dem Zusammenspiel der genannten Parameter ergibt sich eine hohe Haftzugfestigkeit und eine hohe Schubfestigkeit in axialer und tangentialer Richtung zwischen Substrat und Beschichtung.

Insbesondere die mit dem erfindungsgemäßen Werkzeug durch Umformen (Rollen) hergestellten Hinterschnitte in Verbindung mit einer großen Mikrorauhigkeit auf den erhabenen Flächen der Stegen ermöglichen die gewünschten Eigenschaften.

Die genannten Prozessparameter können durch das erfindungsgemäße Werkzeug eingestellt werden.

Die Mikrorautiefe wird wesentlich von der Größe und Form der Diamantkörner auf der Walze des Werkzeugs beeinflusst.

Die Größe der Hinterschnitte GHs hängt stark von der Zustellkraft mit der die auf der Walze befindlichen Diamantkörner in das Substrat gedrückt werden und dadurch die Stege verformen.

Des Weiteren hängt das Ergebnis des Aufrauens noch von der Vorschubgeschwindigkeit, sowie Art des Schmiermittels sowie Volumenstrom und Druck des Schmiermittels ab.

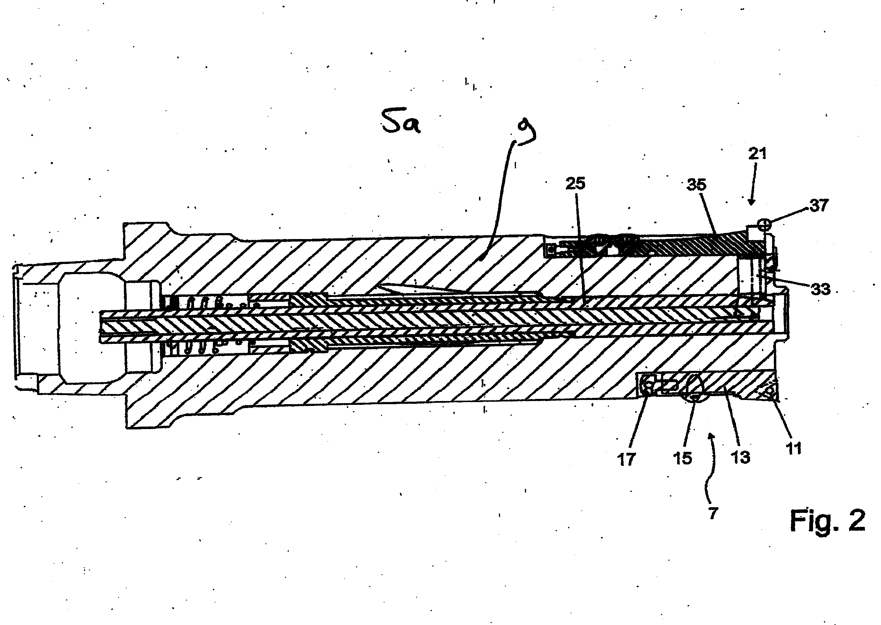

Figur 2 zeigt ein Ausführungsbeispiel der erfindungsgemäßen Vorrichtung 5 im Längsschnitt. Dabei ist die Schnittebene so gelegt, dass das dritte Werkzeug 7, welches zum Feinbohren dient, und das zweite Werkzeug 21, welches zum Profilieren der Bohrung dient, sichtbar sind.

Das erste Werkzeug 7 ist mit einem Grundkörper 9 verschraubt. Das erste Werkzeug 7 umfasst eine Feinbohrschneidplatte 11, die auf einem Träger 13 befestigt ist. Der Träger 13 ist gelenkig oder elastisch mit dem einen Grundkörper 9 verbunden.

Durch eine erste Stellschraube 15 kann die Feinbohrschneidplatte 11 radial eingestellt werden, um den Durchmesser D0 exakt einzustellen.

Durch eine zweite Stellschraube 17 kann die Feinbohrschneidplatte 11 in axialer Richtung eingestellt werden.

In dem Grundkörper 9 sind bevorzugt mehrere Feinbohrschneidplatten 11 über den Umfang verteilt angeordnet, welche vor dem Einsatz der Vorrichtung 5a auf den gewünschten Bearbeitungsdurchmesser eingestellt werden. Durch den Einsatz mehrerer Feinbohrschneidplatten 11 wird die Standmenge deutlich erhöht.

Alle Feinbohrschneidplatten 11 befinden sich in Trägern 13, die sowohl in radialer als auch in axialer Richtung justierbar sind.
In der Figur 2 ist das zweite Werkzeug 21 zum Herstellen des Profilstegs 1 (siehe Figur 1) ebenfalls gut sichtbar.

In dem Grundkörper 9 sind eine erste Zustellstange 25 und eine optionale zweite Zustellstange 27 axial verschiebbar geführt. Die optionale zweite Zustellstange 27 hat bei dem dargestellten Ausführungsbeispiel keine Funktion.

Die Zustellstange 25 ermöglicht die radiale Zustellbewegung des zweiten Werkzeugs 21.

Wenn die Zustellungstange 25 in axialer Richtung des Grundkörpers 9 in Richtung des zweiten Werkzeugs 21 bewegt wird, dann verschiebt ein rohrförmiger Konus 31 einen radial angeordneten Zustellstift 33 in radialer Richtung. Der Zustellstift 33 wiederum drückt einen Biegehalter 35 mit der Formschneidplatte 37 radial nach außen. Dadurch erfolgt eine Zustellung des zweiten Werkzeugs 21.

Der Biegehalter 35 ist wiederum durch eine Axialjustierung in seiner Position einstellbar.

In der in Figuren 2 dargestellten Vorrichtung 5a sind also die zwei Werkzeuge 7 und 21 integriert, welche die spanabhebenden Bearbeitungsschritte 1 und 2 des erfindungsgemäßen Verfahrens durchführen.

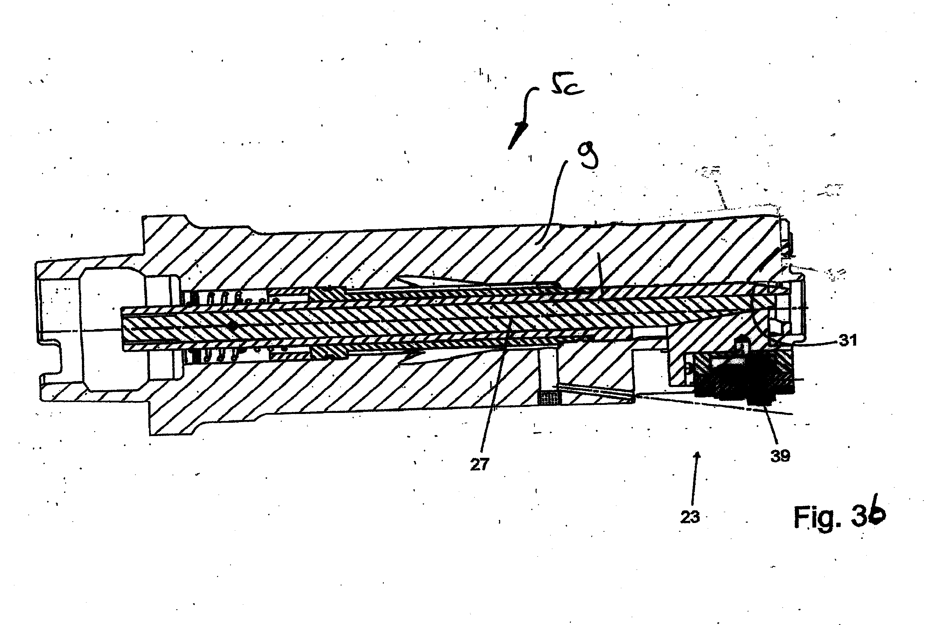

Der dritte Bearbeitungsschritt wird mit einer separaten Vorrichtung 5c durchgeführt, die nachfolgend anhand der Figur 3b erläutert wird. Durch die Trennung in spanabhebende Bearbeitungen und der Umformung wird die Gefahr von klemmenden Spänen zwischen Bohrung und den für das Umformen benötigten Walzen des dritten Bearbeitungsschritts minimiert.

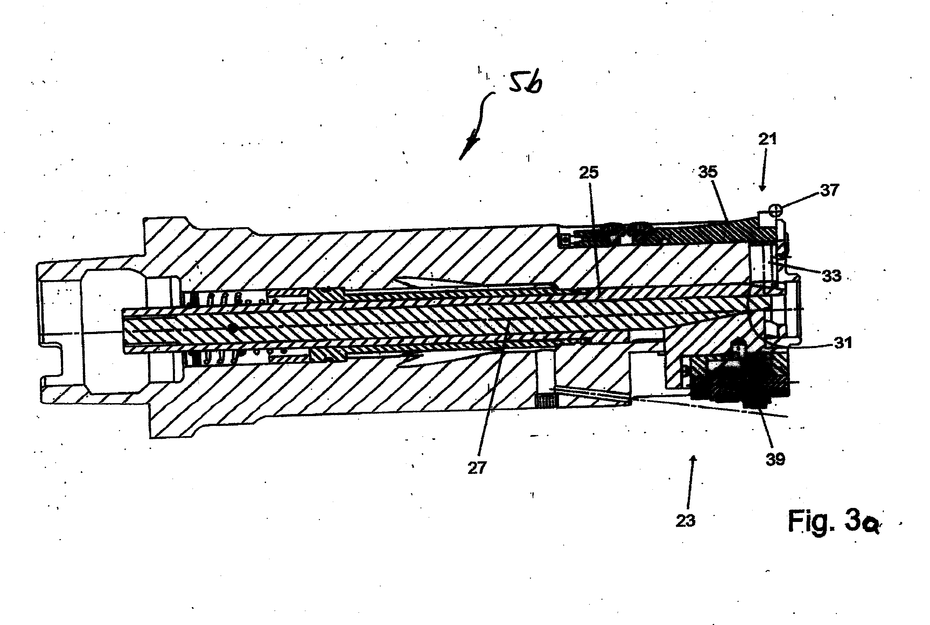

Figur 3a zeigt eine weitere erfindungsgemäße Vorrichtung 5b in einem Längsschnitt.

In dieser Vorrichtung 5b sind das zweite Werkzeug 21 zum Herstellen des Profilstegs 1 (siehe Figur 1) und das dritte Werkzeug 23 zum Umformen des Profilstegs 1 integriert und in Figur 3a dargestellt. Es können von den Werkzeugen 21 und 23 mehrere baugleiche Werkzeuge über den Umfang verteilt angeordnet sein (nicht sichtbar in Figur 3a).

In dem Grundkörper 9 sind eine erste Zustellstange 25 und eine zweite Zustellstange 27 axial verschiebbar geführt.

Die Zustellstangen 25, 27 ermöglichen die unabhängige radiale Zustellbewegung des zweiten Werkzeugs 21 und des dritten Werkzeugs 23.

Wenn die Zustellungstange 25 in axialer Richtung des Grundkörpers 9 in Richtung des zweiten Werkzeugs 21 bewegt wird, dann verschiebt ein rohrförmiger Konus 31 einen radial angeordneten Zustellstift 33 in radialer Richtung. Der Zustellstift 33 wiederum drückt einen Biegehalter 35 mit der Formschneidplatte 37 radial nach außen. Dadurch erfolgt eine Zustellung des zweiten Werkzeugs 21.

Der Biegehalter 35 ist wiederum durch eine Axialjustierung in seiner Position einstellbar.

Die zweite Zustellstange 27 bewirkt die Zustellung des dritten Werkzeugs 23, das den von dem zweiten Werkzeug 21 zuvor geschaffenen Profilsteg 1 mit einer Walze 39 umformt.

Zu diesem Zweck wird die zweite Zustellstange 27 ebenfalls zum zweiten Werkzeug 23 hin bewegt und betätigt damit eine radiale Zustellung der Walze 39 gegen die zu bearbeitende Bohrungswand. Besonders vorteilhaft ist es, wenn die radiale Zustellung der Walze 39 formschlüssig erfolgt, so dass die Zustellkraft unabhängig von der auf die Walze 39 wirkenden Fliehkraft gesteuert werden kann.

Wenn die Bearbeitungsschritte 2 (Profilieren der Bohrungsoberfläche) und 3 (Umformen der Bohrungsoberfläche) in einer Vorrichtung 5b zusammengefasst sind, dann hat dies den Vorteil, dass das Umformwerkzeug 39 absolut koaxial zu den zuvor durch das zweite Werkzeug 21 hergestellten Stege in die Bohrung einfährt. Dadurch werden in manchen Anwendungen Qualität und Standzeit verbessert.

Bevorzugt sind zwei oder drei erste Werkzeuge 7, zwei oder drei zweite Werkzeuge 21 und zwei oder drei dritte Werkzeuge 23 gleichmäßig oder ungleichmäßig über den Umfang des Grundkörpers 9 verteilt angeordnet, so dass sich die während des Umformens auftretenden Radialkräfte gegenseitig egalisieren. Dadurch wird die Maschinenspindel in der die Vorrichtung 5a, 5b oder 5c aufgenommen ist, entlastet.

Eine ungleichmäßige Verteilung über den Umfang (beispielsweise 110°, 130° und 120° kann Schwingungen während der Bearbeitung wirkungsvoll unterdrücken.

Es hat sich als vorteilhaft erwiesen, wenn zwischen dem zweiten Werkzeug 21 und dem dritten Werkzeug 23 mit seiner diamantbestückten Walze 39 ein Spanumlenker (nicht sichtbar in Figur 3b) bevorzugt an dem Grundkörper 9 angebracht ist. Damit wird verhindert, dass die von dem zweiten Werkzeug 21 produzierten Späne zwischen Walze 39 und die Stege 1, 3 des Substrats gelangen. Dadurch könnte die Walze 39 beschädigt werden und/oder es findet eine unkontrollierte und nicht vorhersehbare starke Verformung des Stegs 1, 3 statt. Beides ist unerwünscht.

Die Walze 39 ist in einem Zustellrahmen 41 axial und radial gelagert. Dabei ist wird die Neigung der Walze 39 so justiert, dass sie bevorzugt orthogonal zur Längsrichtung des Profilstegs 1 ist. Dadurch rollt die Walze 39 ohne Gleitbewegung über den Profilsteg 1 und bewirkt die gewünschte Umformung. Dadurch wird die Standzeit der Walze 39 sehr stark erhöht.

Figur 3b zeigt die erfindungsgemäße Vorrichtung 5c in einem Längsschnitt.

Bei diesem Ausführungsbeispiel sind in dem Grundkörper 9 nur ein oder mehrere dritte Werkzeuge 23 zum Umformen des

Profilstegs 1 angeordnet. Die Werkzeuge 7 und 21 sind nicht Teil der Vorrichtung 5c.

Ansonsten arbeitet das dritte Werkzeug 23 genauso wie anhand der Figur 3a beschrieben. Daher wird, um Widerholungen zu vermeiden, auf die Beschreibung der Figur 3a verwiesen.

Figur 3.1 zeigt die Formschneidplatte 37 mit den gestuften Partialschneiden 43, 45 und 47, welche sukzessiv tiefer ins Material eindringen.

Der axiale Abstand der Partialschneiden 41, 43 und 45 entspricht dem Vorschub bei der Bohrungsbearbeitung. Die Partialschneiden 41, 43 und 45 können jeweils etwa 0,1 mm Material abtragen.

Wichtig ist im Zusammenhang mit der Erfindung, dass die Partialschneiden 43, 45, und 47, keinen Hinterschnitt erzeugen. Dies ist wegen des nachgelagerten Umformprozesses nicht nötig.

Figur 3.2 zeigt die Aufnahme der Walze 39 im Zustellrahmen 41. Durch Justierschrauben kann die Drehachse 40 der Walze 39 gegenüber der Längsachse der Bohrung bzw. des von dem ersten Werkzeug 21 geschaffenen Profilstegs 1 eingestellt werden.

Der Zustellrahmen 41 ist gegen radiales Herauslösen durch die Zentrifugalkraft durch eine Blattfeder gesichert.

Mit dieser Anmeldung wird auch Schutz beansprucht für die mit der erfindungsgemäßen Vorrichtung und/oder nach dem erfindungsgemäßen Verfahren hergestellten bzw. bearbeiteten Werkstücke oder Substrate mit einer aufgerauten Oberfläche, wobei die aufgeraute Oberfläche Stege (3) mit einer Profilweite (Pw) und einer Profiltiefe (Pt) aufweist, und wobei die Stege (3) an ihrer Oberseite eine Mikrorauheit (Mrh) aufweisen, und wobei die Mikrorauheit (Mrh) durch Umformen mittels Diamantkörnern erzeugt worden ist.

Insbesondere beträgt eine Profilweite (Pw) der Stege 50 - 400 µm. Eine Größe der Hinterschnitte (GHs) ist kleiner oder gleicht ≤ 0,5 • der Profilweite (Pw) oder beträgt 25 - 200 µm beträgt.

Eine Profiltiefe (Pt) der Stege (3) beträgt bevorzugt 50 - 200 µm und die Mikrorauheit (Mrh) der Stege (3) beträgt an ihrer Oberseite ≤ 0,5 • der Profiltiefe (Pt) oder 25 - 100 µm.

Eine Größe der Hinterschnitte (GHs) ist bevorzugt kleiner oder gleich 0,5 • der Profilweite (Pw) oder 25 - 200 µm und ein Profilabstand Pa ist größer oder gleich 2 • der Größe der Hinterschnitte (GHs).

## Patentansprüche

1. Vorrichtung zur Erzeugung eines Aufrauprofils an der Innenfläche einer Bohrung, das als kombiniertes Zerspanwerkzeug ausgebildet ist, mit einem, der Zerspanung mit geometrisch bestimmter Schneide dienenden Schneidwerkzeug zur Erzeugung einer Vorform eines Aufrauprofils, wobei dieses Werkzeug in radialer Richtung zustellbar ist, **dadurch gekennzeichnet, dass** ein erstes Werkzeug (7) mit mindestens einer geometrisch bestimmten Schneide (11) vorgesehen ist, und dass das erste Werkzeug (7) dem Schneidwerkzeug des zweiten Werkzeugs in Vorschubrichtung vorgelagert angeordnet ist.

2. Vorrichtung zur Erzeugung eines Aufrauprofils an der Innenfläche einer Bohrung, das als kombiniertes Zerspan- und Umformwerkzeug ausgebildet ist, mit einem, der Zerspanung mit geometrisch bestimmter Schneide dienenden Schneidwerkzeug (21) zur Erzeugung einer Vorform eines Aufrauprofils und mit einem der Umformung der Vorform des Aufrauprofils dienenden Werkzeug, wobei die diese Werkzeuge in radialer Richtung zustellbar sind, **dadurch gekennzeichnet, dass** das der Umformung der Vorform des Aufrauprofils dienende Werkzeug (23) mindestens eine drehbar gelagerte Walze (39) aufweist, und dass eine Drehachse (40) der mindestens einen Walze (39) mit der Vorschubrichtung der Vorrichtung (5b) orthogonal zu einem von dem Schneidwerkzeug (21) erzeugten Profilsteg (1) ist.

3. Vorrichtung zur Erzeugung eines Aufrauprofils an der Innenfläche einer Bohrung, das als Umformwerkzeug ausgebildet ist, wobei das Umformwerkzeug (23) in radialer Richtung zustellbar ist, **dadurch gekennzeichnet, dass** das Umformwerkzeug (23) mindestens eine drehbar gelagerte Walze (39) aufweist, und dass eine Drehachse (40) der mindestens einen Walze (39) mit der Vorschubrichtung der Vorrichtung (5) einen Winkel alpha einschließt, wobei der Winkel alpha größer 0° und kleiner 15° ist, so dass die Drehachse (40) der mindestens einen Walze (39) orthogonal zu einem von dem Schneidwerkzeug (21) erzeugten Profilsteg (1) ist.

4. Vorrichtung nach Anspruch 1 oder 2, **dadurch gekennzeichnet, dass** das erste Werkzeug (7) mindestens eine Schneide (11) umfasst, und dass die mindestens eine Schneide (11) mittelbar oder unmittelbar an einem Grundkörper (9) der Vorrichtung angeordnet ist.

5. Vorrichtung nach einem der Ansprüche 1, 2, und 4, **dadurch gekennzeichnet, dass** die mindestens eine Schneide (11) des ersten Werkzeugs (7) auf einem Träger (13) befestigt ist, und dass der Träger (13) mit dem Grundkörper (9) verschraubt ist.

6. Vorrichtung nach Anspruch 4 oder 5, **dadurch gekennzeichnet, dass** die mindestens eine Schneide (11) des ersten Werkzeugs (7) vor der Bearbeitung einstellbar ist.

7. Vorrichtung nach einem der vorhergehenden Ansprüche,
**dadurch gekennzeichnet, dass** eine Profilschneide (37) des zweiten Werkzeugs (21) mehrere, bevorzugt mindestens drei Partialschneiden (41, 43, 45) aufweist.

8. Vorrichtung nach einem der vorhergehenden Ansprüche,
**dadurch gekennzeichnet, dass** die Profilschneide (37) des zweiten Werkzeugs (21) auf einem Biegehalter (35) befestigt ist, und dass der Biegehalter (35) an einem zu der Formschneide (37) beabstandeten Ort mit dem Grundkörper (9) verschraubt ist.

9. Vorrichtung nach Anspruch 8, **dadurch gekennzeichnet, dass** in dem Grundkörper (9) ein radial verschiebbarer Zustellstift (33) geführt ist, dass ein erstes Ende des Zustellstifts (33) den Biegehalter (35) abstützt, und dass ein zweites Ende des Zustellstifts (33) auf einem Zustellkonus (31) einer ersten der Zustellstange oder eines ersten Zustellrohrs (25) aufliegt.

10. Vorrichtung nach einem der Ansprüche 2 bis 9,
**dadurch gekennzeichnet, dass** eine Drehachse (40) der Walze (39) mit der Vorschubrichtung der Vorrichtung (5) einen Winkel alpha einschließt, wobei der Winkel alpha größer 0° und kleiner 15° ist.

11. Vorrichtung nach einem der Ansprüche 2 bis 10,
**dadurch gekennzeichnet, dass** eine Mantelfläche der Walze (39) mindestens bereichsweise mit Hartstoffen, bevorzugt mit monokristallinen Hartstoffen, wie zum Beispiel Diamanten, belegt ist.

12. Vorrichtung nach einem der Ansprüche 2 bis 11,
**dadurch gekennzeichnet, dass** jede Walze (39) radial und axial gelagert auf einem radial verschiebbaren Zustellrahmen (41) befestigt ist.

13. Vorrichtung nach Anspruch 12, **dadurch gekennzeichnet, dass** der Zustellrahmen (41) eine schräge Fläche aufweist, die mit einem Zustellkonus einer zweiten Zustellstange oder eines zweiten Zustellrohrs (27) zusammenwirkt.

14. Vorrichtung nach Anspruch 13, **dadurch gekennzeichnet, dass** der Zustellrahmen (41) mit einer Zustellstange oder einem Zustellrohr (27) formschlüssig gekoppelt ist.

15. Vorrichtung nach einem der Ansprüche 2 bis 14,
**dadurch gekennzeichnet, dass** jede Walze (39) mit einer einstellbaren Kraft gegen die umzuformende Bohrung gepresst wird.

16. Vorrichtung nach einem der Ansprüche 2 bis 15,
**dadurch gekennzeichnet, dass** jede Walze (39) gegen die während der Bearbeitung auftretenden Fliehkräfte gesichert ist.

17. Vorrichtung nach einem der Ansprüche 2 bis 16,
**dadurch gekennzeichnet, dass** die mindestens eine Walze (39) zylindrisch, ballig oder kegelstumpfförmig ausgebildet ist.

18. Vorrichtung nach einem der Ansprüche 2 bis 17,
**dadurch gekennzeichnet, dass** eine Länge der mit Diamanten bestückten Fläche der Walze (39) mindestens das 10-fache des Abstands zwischen zwei Partialschneiden (43, 45, 47) des zweiten Werkzeugs (21) oder mindestens das 10-fache des Vorschubs beträgt.

19. Vorrichtung nach einem der Ansprüche 2 bis 18,
**dadurch gekennzeichnet, dass** eine Korngröße der Diamanten größer als 1/3 einer Breite der von dem zweiten Werkzeug (21) geschaffenen Stege (1) ist.

20. Vorrichtung nach einem der vorhergehenden Ansprüche,
**dadurch gekennzeichnet, dass** das zweite Werkzeug (21) und/oder das dritte Werkzeug (23) vor, während und/oder nach der Bearbeitung einer Bohrung zustellbar sind.

21. Vorrichtung nach einem der vorhergehenden Ansprüche,
**dadurch gekennzeichnet, dass** eine durch das zweite Werkzeug (21) geschaffene Höhe eines Profilstegs (1) durch das anschließende Walzen mit dem dritten Werkzeug (23) um bis zu 50%, bevorzugt auf eine Profilhöhe von ca. 100 µm, reduziert wird.

22. Vorrichtung nach einem der Ansprüche 1, 2 sowie 4 bis 21, **dadurch gekennzeichnet, dass** das erste Werkzeug (7), das zweite Werkzeug (21) und/oder das dritte Werkzeug (23) in Vorschubrichtung mit minimalem Abstand angeordnet sind.

23. Vorrichtung nach einem der vorhergehenden Ansprüche, **dadurch gekennzeichnet, dass** das erste Werkzeug (7), das zweite Werkzeug (21) und/oder das dritte Werkzeug (23) in Vorschubrichtung () koaxial zu einer Drehachse der Vorrichtung (5) angeordnet sind.

24. Vorrichtung nach einem der vorhergehenden Ansprüche, **dadurch gekennzeichnet, dass** an einem Grundkörper (9), dem zweiten Werkzeug (21) und/oder dem dritten Werkzeug (23) eine Umlenkkontur zum Ableiten der Späne vorgesehen ist.

25. Vorrichtung nach einem der vorhergehenden Ansprüche, **dadurch gekennzeichnet, dass** in dem Grundkörper (9) Austrittsöffnungen (49) für Kühlschmiermittel und/oder für kryogene Medien vorgesehen sind.

26. Verfahren zum Aufrauen einer zylindrischen Oberfläche eines Werkstücks, umfassend die Bearbeitungsschritte
1) Feinbohren mit einem ersten Werkzeug (7),
2) Profilieren mindestens eines Profilstegs (1) mit einem zweiten Werkzeug (21) und
3) Umformen des mindestens eines Profilstegs (1) mit einem dritten Werkzeug (23), **dadurch gekennzeichnet, dass** die Bearbeitungsschritte mit zwei oder drei verschiedenen Vorrichtungen durchgeführt werden.

27. Verfahren nach Anspruch 26, **dadurch gekennzeichnet, dass** die Bearbeitungsschritte 1 und 2 mit einem Kombinationswerkzeug (5a) und der Bearbeitungsschritt 3 mit einer separaten Vorrichtung (5c)erfolgt.

28. Verfahren nach Anspruch 26, **dadurch gekennzeichnet, dass** der Bearbeitungsschritt 1 mit einem Feinbohrwerkzeug ()erfolgt und die Bearbeitungsschritte 2 und 3 mit einem Kombinationswerkzeug (5b) erfolgt.

29. Verfahren nach einem der Ansprüche 26 bis 28,
**dadurch gekennzeichnet, dass** alle drei Bearbeitungsschritte in einer Aufspannung des Werkstücks erfolgen.

30. Verfahren nach einem der Ansprüche 26 bis 29,
**dadurch gekennzeichnet, dass** die drei Bearbeitungsschritte in verschiedenen Bearbeitungsstationen erfolgen.

31. Verfahren nach einem der Ansprüche 26 bis 30,
**dadurch gekennzeichnet, dass** das Aufrauen der Oberfläche in mehreren Arbeitshüben erfolgt.

32. Verfahren nach Anspruch 31, **dadurch gekennzeichnet, dass** zwischen den Arbeitshüben das zweite Werkzeug (21) und / oder das dritte Werkzeug (23) in radialer Richtung zugestellt wird.

33. Verfahren nach einem der Ansprüche 26 bis 32,
**dadurch gekennzeichnet, dass** die Achslage der Vorrichtungen (5a, 5b, 5c) relativ zu der bearbeiteten Oberfläche unverändert bleibt.

34. Verfahren nach einem der Ansprüche 26 bis 33,
**dadurch gekennzeichnet, dass** die Vorschübe der Vorrichtungen (5a, 5b, 5c) zumindest bei den Bearbeitungsschritten 1 und 2 bei allen Arbeitshüben gleich ist.
